# EUROPEAN PATENT SPECIFICATION

(11) **EP 3 869 438 B1**
(45) Date of publication and mention of the grant of the patent: **13.08.2025**
(21) Application number: 21158007.1
(22) Date of filing: 18.02.2021
(51) Int. Cl.: G06Q 30/02, E05D 7/082, E06B 9/11, G06F 16/955

(54) **WINDOW WITH MACHINE-READABLE IDENTIFIER**
FENSTER MIT MASCHINENLESBARER KENNUNG
FENÊTRE AVEC IDENTIFICATEUR LISIBLE PAR MACHINE

(30) Priority: 21.02.2020 DK PA202070107; 24.03.2020 DK PA202070181
(43) Date of publication of application: 25.08.2021
(73) Proprietor: VKR Holding A/S, 2970 Hørsholm (DK)
(72) Inventor: MØLLER, Morten, 2970 Hørsholm (DK)
(74) Representative: Høiberg P/S

(56) References cited:
- EP-A1- 2 205 804
- EP-B1- 1 003 953
- DE-A1- 102012 017 000
- JP-A- 2012 062 740
- US-A1- 2014 006 207
- US-A1- 2014 203 085
- KEYLITE ROOF WINDOWS: "Keylite Innovation - Features & Benefits with SkillBuilder's Roger Bisby", 7 November 2017 (2017-11-07), XP093134765, Retrieved from the Internet <URL:https://www.youtube.com/watch?v=Ycn-mRU6LXc> [retrieved on 20240226]

## Description

### Technical Field

The present disclosure relates to a window for a building and a window system comprising a plurality of windows, wherein each window comprises a removable representation item and a removable identification item.

### Background

Windows for buildings are normally arranged in outer walls or roof structures of a building, and are configured to cover window apertures in such buildings or roof structures. When such windows have been installed, end users (e.g. habitants, owners or administrators of the building) may find it quite difficult to identify and find suitable covering devices such as blinds or shutters for the installed window, or may not even be aware of which compatible aperture covering solution that exists for the respective window.

It is generally known to provide coverings such as roller blinds that are intentionally too wide, but are designed to be cut into the correct size after a purchase of the roller blind, and the manufacturer here hence relies on the user to cut the roller blind into a suitable size. A similar solution is provided for venetian blinds where slats of various types of hard material, including wood, plastic or metal may be cut into a desired size by a suitable cutting tool.

An alternative solution is that different window coverings, which are specifically adapted to different sizes, types and/or generations of windows, are made available by e.g. the window manufacturers, and these fit the respective window size, type and/or generation. Hence, when a user buys such a window covering, the user is assured that it fits the respective window. This naturally necessitates that a larger amount of different window coverings are needed. Moreover, this makes it complicated for the user to select the right covering device and may provide an unfortunate user experience when users tries to order such covering devices, as the risk of erroneously ordering an incompatible covering device may be significant. Hence, it is also known to apply an information label on the specific window which provides window information such as window size, window generation, window type, window material etc. which enables the user to identify relevant window information. Moreover, it is known to provide a Quick Response (QR) code on a window, where the code comprises information of the window.

A promotional video available at https://www.youtube.com/watch?v=Ycn-mRU6LXc shows a roof window equipped with a removable sticker applied to the glazing, the removable sticker including a visual representation of a window covering.

However, despite of all these measures provided, problems still exists for users when identifying and/or selecting correct accessory such as covering devices for windows.

The present disclosure may help to solve one or more of the above mentioned issues. Additionally or alternatively, the present disclosure may help to provide an enhanced user experience for users that may have a desire or need of purchasing and/or getting informed of available window accessories for a window.

### Summary

The present invention is directed to a method of directing a user to an online store by means of a mobile user terminal in order for a user to purchase a window covering device at an online store, as defined in the appendend claims.

A window for a building may be any type of window known in the art. In some embodiments, the window may be a substantially rectangular glazed window.

The window comprises a window pane and a frame, wherein the pane is arranged in the frame. The window may be opened and closed by changing the relative position of the window pane and the frame by any number of mechanisms as is known in the art. Alternatively or additionally, the window pane may be rigidly affixed to the frame and/or locked by a latch mechanism so that the window is shut or held in position.

The pane may preferably be an insulated glass (IG) pane such as a gas insulated glass pane or a vacuum insulated glass (VIG) pane. The gas insulated glass unit may comprise a cavity between two glass sheets which is filled with argon or another gas. Generally, the insulated glass pane may comprise two, three (also called "tripple pane") or more cavities separated by the glass sheets of the insulated glass unit.

The window comprises a removable representation item, which comprises a visual representation of a window covering device. The removable representation item covers at least a first part of the window pane. The visual representation illustrates a window covering device mounted at the window. The window covering device may for example in embodiments be a shade or screen to be installed at the window and configured to provide one or more functions. The one or more functions may provide shading, privacy and/or managing heat transfer from the sun through the window pane by reducing or increasing the amount of sunlight allowed to pass through the glass pane and into the interior of the building, thereby heating the room.

In some embodiments, the window covering device comprises a sheet of flexible material having a size and shape substantially identical to or slightly wider than, at least the visible part of the window pane that may not be covered by the frame. The sheet of flexible material may in embodiments of the present disclosure be made from a textile a non-woven fabric, a polymer such as a plastic sheet or the like. In some embodiments, the window covering device includes one or more drapes to be mounted at an interior side of the window. The one or more drapes may provide that a user can select a preferred style for the one or more drapes among a plurality of decorative patterns and/or colours.

In some embodiments of the present discloure, the window covering device comprises blinds, such as pleated blinds, roller blinds, interior shutters or the like to be mounted at an interior side of the window. The blinds may provide that a user can select a preferred style, material or colour for the blinds among a plurality of available combinations. Alternatively or additionally, the window covering device may comprise structural shading elements, such as outdoor blinds or exterior shutters provided at an exterior side of the window.

The removable representation item may be a removable sheet, such as a foil or plastic sheet, which is removably attached to a surface of the window pane. The removable sheet may be made of a transparent, semi-transparent or translucent material, such as a clear plastic or polymer material, such as softened polyvinyl chloride (PVC), polyethylene terephthalate (PET) protective films or the like.

In some embodiments, the visual representation is a two-dimensional mock-up, such as a picture, a drawing or an image of a physical object. The two-dimensional mock-up may be of a visible part of the window covering device as it would appear when installed at the window, such as when viewed through the window pane. The two-dimensional mock-up may be a three-dimensional model representation of the window covering device projected onto an image plane, such as the image plane represented by the window pane as seen from a viewing perspective of the user.

The removable representation item comprising a visual representation of a window covering device may provide that an end user is able to envisage how the covering device of the type represented by the visual representation will look when installed at the window. It is advantageous that the end user is able to envisage how the covering device of the type will look before and/or without installing it, because such a visual representation makes it easier for the user to select the right covering device and thus improves the user experience when ordering covering devices for such windows.

In some embodiments, the visual representation illustrates a substantially full size window covering device. By illustrating a substantially full size window covering device, the window may provide that the end user is better able to envisage how the covering device of the type represented by the visual representation being to scale.

The removable identification item comprises at least one machine-readable identifier, such as a Quick Response (QR) code, a barcode or a similar visual encoding system. It is understood that an identifier may be a label or marking comprising a plurality of data elements, such as a sequence of numbers, letters or symbols chosen according to an encoding system to represent identification data. Such identifiers being machine-readable may provide that identification data can be decoded by a computer e.g. from digital images depicting the machine-readable identifier taken at a suitable distance and/or viewing angle. Particularly, a number of software applications for QR code scanning are commercially available and suitable for use e.g. with a smartphone. In some embodiments, the at least one machine-readable identifier is a QR code.

The removable identification item comprising a machine-readable identifier provides that an end user can operate a mobile user terminal, such as a smartphone or a similar hand-held device comprising a suitable identification retrieving system, to scan the machine-readable identifier, e.g. via a digital camera, and retrieve the identification data easily. This enables a solution where the user can be presented with one or more covering devices which are compliant with the window in a user friendly way, and may hence help to reduce the risk of wrong purchases of covering devices for the windows at which the representation items and identification items are placed.

The inventors have found that using representation items and identification items which are removable allows for covering large portions of the visible part of the pane temporarily, i.e. until they are removed by a user, without encumbering the operation nor subsequent appearance of the window where the window pane is see-through. By covering a larger portion of the visible part of the pane in this way, the window may provide that the visual representation of the window covering device is of a sufficient size to allow the end user to envisage how the full-size covering device would look. It is advantageous that the visual representation is clearly observable from a distance, such as more than a meter or more than five or more than 10 meters away, because it allows the end user to envisage how the window covering device would look in combination with surrounding interior décor e.g. in case a substantially similar, real covering device is installed. Moreover, the window may provide that the removable identification item is also of a sufficient size to allow the machine-readable identifier to be reliably scanned, e.g. also from distance such as from more than 1 meter or more than 2 meters or 3 meters away from the machine-readable identifier.

In some embodiments, the machine-readable identifier comprises a Uniform Resource Locator (URL) representation which is directed to a web address, such as an online store. The URL representation may be encoded as part of the machine-readable identifier so that an end user scanning the machine-readable identifier is presented with the web address, such as via a barcode or QR code scanning software application installed at a smartphone. Such a software application may further be configured to prompt the user to visit the presented web address, such as via an internet browser software application also installed at the smartphone or another handheld electronic device. The window having a machine-readable identifier provides that the end user can be automatically directed to a web address of an online store offering window coverings, which are specifically adapted to different sizes, types and/or generations of the windows e.g. by the window manufacturer.

In some embodiments, the machine-readable identifier comprises identification data of the window and/or identification data of the at least one window covering device represented by the visual representation. The identification data may in some embodiments of the present disclosure provide the necessary information for identifying and/or selecting correct accessory such as covering devices for windows.

Retrieving the identification data by scanning the machine-readable identifier may be less error-prone than manual entry by a user, whereby the user can be certain that this information was read correctly.

In some embodiments, the machine-readable identifier comprises a Uniform Resource Locator (URL) representation configured to provide the identification data to a server at a web address when the machine-readable identifier is read by an automatic identification reader of a mobile user terminal. The mobile user terminal may be a smartphone and the automatic identification reader a QR code scanner.

E.g. in aspects of the present disclosure, the identification data may be embedded in the Resource Locator (URL) representation information. Hence, the URL representation information may be designed so that a web address retrieved/established based on the (URL) representation information will automatically contain the identification information embedded in the web address. Hereby, the URL representation may be configured so as to provide that the identification data is provided to a server at the established web address when the machine-readable identifier is read by an automatic identification reader of a mobile user terminal. This may e.g. be obtained by a software application of the user terminal which may prompts the user to visit the retrieved web address such as via an internet browser software application installed at the mobile user terminal.

The identification data being provided to a server at a web address by scanning a machine-readable identifier may further provide an enhanced user experience for users that may have a desire of purchasing window accessories for a window.

In some embodiments, the Uniform Resource Locator (URL) representation comprises the identification data. The identification data may be part of the web address. Alternatively or additionally, the identification data may be included in the web address as part of a Hypertext Transfer Protocol (http) request to the server, such as by GET request strings. By having the URL representation comprise identification data, providing the identification data to a server at the web address is made possible by using commercially available software applications e.g. for QR code scanning. It is understood that both the URL representation and the identification data are suited for digital representation at a processor, e.g. as a sequence of ASCII characters, and hence their combination can be made to form a valid web address.

In some embodiments, the machine-readable identifier comprises a Quick Response (QR) code provided at, such as printed on, the removable identification item, wherein the Quick Response (QR) code comprises the identification data.

The automatic identification reader may be a QR code scanner system provided by means of a camera of the mobile user terminal and a QR code recognition software application installed at the mobile user terminal. Alternatively or additionally, the machine-readable identifier is a barcode, such as a two-dimensional barcode, and the automatic identification reader is a barcode scanner.

In other aspects of the present disclosure, the machine-readable identifier may be a radio-frequency identification (RFID) tag or a near-field communication (NFC) tag.

In some embodiments, the identification data comprises one or more of a product type information, product size information, product manufacturing information, product accessory category information and/or product material information related to the window and/or the window covering device. Preferably, the identification data comprises at least a product type and/or a product size. The product type and size may be encoded as a sequence of characters, such as by a combination of a few letters and numerals that may have been predetermined by the manufacturer, such as e.g. by constructing a look-up table. The information may be provided directly as-is in the identification data or be represented by predetermined codes.

The type information may comprise a window type, a window model identifier, an opening mechanism type and/or a glazing type. The material information may comprise a window frame material, an interior colour, a thermal insulation rating and/or a covering material. The size information may comprise at least a height measurement and a width measurement e.g. of the visible part of the window pane. The product accessory category information may be a window covering device type. The product type and size information may generally be necessary for identifying and/or selecting correct accessory such as covering devices for windows.

In some embodiments, the frame comprises a first fastening mechanism configured to engage with a second fastening mechanism of at least one window covering device of a type represented by the visual representation at the removable representation item. It is understood that while this fastening system may be any suitable means of fastening a window covering device to the frame, such as with screw brackets or the like, only window coverings which are specifically adapted to that particular size, type and/or material of the windows can be guaranteed to fit the respective window.

In some embodiments, the machine-readable identifier comprises identification data of the window. The machine-readable identifier may comprise physical dimensions and/or a predetermined code corresponding to physical dimensions of the window. The identification data may comprise one or more of a product type information, a product size information, a product manufacturing information, a product accessory category information and a product material information related to the window.

In some embodiments, the identification data of the window comprises one or more of window size information, window type information and/or window material information. The identification data of the window may in embodiments comprise at least information of window size and a window type. Alternatively or additionally, the identification data may comprise window manufacturing information, such as model year and/or model generation. The identification data provides that the window manufacturer or vendor can reliably identify e.g. the type and/or size of window covering devices which will fit that specific window.

In some embodiments, the machine-readable identifier comprises identification data of the window covering device. The machine-readable identifier may comprise physical dimensions and/or a predetermined code corresponding to physical dimensions of the window covering device illustrated by the visual representation. Alternatively or additionally, the machine-readable identifier may comprise physical characteristics and/or a predetermined code corresponding to physical characteristics of the frame and/or the window pane at which the removable representation item is arranged, such as physical characteristics of a first fastening mechanism of the frame. The identification data may comprise one or more of a product type information, a product size information, a product manufacturing information, a product accessory category information and a product material information related to the window covering device, which is illustrated by the visual representation at the removable representation item. The identification data provides that the window manufacturer or vendor can reliably identify e.g. the type and/or size of window covering devices to be made available by for purchase e.g. by the end user, and that the end user can be assured that such products fit the respective window size, type and/or generation.

In some embodiments, the identification data comprises a window covering type information which corresponds to a type of the window covering device compliant with the physical characteristic of the window at which the removable representation item is arranged. The physical characteristic of the window may comprise the height and width of the visible part of the window pane. Alternatively or additionally, the physical characteristic may comprise one or more measurements relating to a first fastening mechanism of the frame and/or a second fastening mechanism of at least one window covering device of a type represented by the visual representation at the removable representation item. By having one or more measurements of the physical characteristic relating to one fastening mechanism, the identification data provides that it is possible to directly determine the physical characteristic relating to the other fastening mechanism, such that the window covering device is compliant with the physical characteristic of the window by having matching fastening mechanisms.

In some embodiments, the identification data of the window covering device comprises one or more of an window covering size information, a window covering type information and/or a window covering colour information. Preferably, the identification data comprises at least an window covering size information and/or a window covering type information. The identification data provides that the end user can unambiguously identify e.g. the type and/or size of window covering devices to be purchased from a window manufacturer or vendor based on that information.

In some embodiments, the removable representation item comprises the removable identification item. The removable identification item may be a part of the removable representation item, such as by being removably or rigidly affixed to the removable representation item, such as by an adhesive layer abutting the representation item. By the removable representation item comprising the removable identification item, the window may provide that the identification item can be easily removed together with the representation item, such as by peeling the representation item off the window.

In some embodiments, at least one of the removable representation item and the removable identification item is a removable sheet, such as a foil or plastic sheet, which is removably attached to a surface of the window pane, such as e.g. by means of a weak adhesive allowing the representation item to be peel off the window pane together with the weak adhesive. Preferably, at least the removable representation item is a removable sheet adhering to the window pane surface. Alternatively or additionally, at least one of the removable representation item and the removable identification item is removably or rigidly affixed to the removable sheet, such as by an adhesive layer abutting the removable sheet.

The removable sheet may in embodiments of the present disclosure be a protection sheet or film attached to the window pane by means of an adhesive in order to provide mechanical protection of the pane during e.g. packaging, transportation and/or installation of the window. The removable sheet may be an innermost sheet attached directly to the window pane surface by means of a weak adhesive layer. It is contemplated that, for some choices of material of the removable sheet, electrostatic adhesion with the window pane may be sufficient for proper attachment. Typically, the sheet is then removed after installation of the window in a building or the like by peeling the removable sheet off the window e.g. in one piece.

In one or more aspects of the present disclosure, the removable identification item comprising the at least one machine-readable identifier may be placed on the window pane or on the removable representation item.

In one or more aspects of the present disclosure, the removable identification item comprising at least one machine-readable identifier may include that the at least one machine-readable identifier be part of, such as integrated in, the removable identification item. For example, the machine-readable identifier may be printed or embossed directly onto the removable representation item together with the visual representation, and hence the removable representation item also constitutes the removable identification item.

In some embodiments, the removable sheet comprises one or more clear parts providing a substantially unhindered view through the pane, and a display part providing the visual representation of at least a covering portion of the window covering device, which is arranged to prevent or reduce a view through the pane.

The one or more clear parts, preferably at least one clear part being uniform and/or uninterrupted, providing a substantially unhindered view through the pane may cover at least 10%, such at least 20%, such as at least 40%, of the surface area of the visible part of the pane. At least the clear parts of the removable sheet may be made from a transparent, semi-transparent or translucent material, such as a clear plastic or polymer material, such as softened polyvinyl chloride (PVC), polyethylene terephthalate (PET) protective films or the like. The display part may be a clear or more opaque part, onto which the visual representation is printed by any number of printing methods known in the art. The display part may be arranged to prevent or reduce a view through the pane, such as by the visual representation of at least a covering portion of the window covering device appearing to provide substantially the same function as the covering portion. The covering portion of the window covering device may be arranged to prevent or reduce a view through the pane when installed at the window.

In one or more other aspects of the present disclosure, the removable representation item may be a removable sheet, such as a cardboard, paper or plastic item, attached to and extending between elongated frame parts of the window instead of adhering to the pane by means of an adhesive. Here, the removable representation item may e.g. be wedged between frame parts, such as elongated sash parts of the window. Also or alternatively, the removable representation item may here be attached to a first fastening mechanism of the frame which is configured to engage with a second fastening mechanism of at least one window covering device if installed at the window, such as a covering device corresponding to a covering device represented by the visual representation of the removable representation item.

In some embodiments, the removable representation item extends substantially along the entire width of the visible part of the window pane.

In some embodiments, the visual representation of the removable representation item extends substantially along the entire width of the visible part of the window pane. The visual representation of the removable representation item, which prevent or reduce a view through the pane may cover at least 30%, such as at least 40%, such as between 50% and 90%, of the surface area of the visible part of the window pane.

It is understood that the visible part of the window pane is the part of the pane that is visible, e.g. from an interior side of the window, and enables a view through the pane in the frame when the representation item and the identification item have both been removed completely from the window. When the visible part of the window pane is substantially rectangular, the surface area is measured as the width times the height.

In some embodiments, the visual representation of the removable representation item extends along a length being at least 1/8, such as at least 1/5, such as at least 1/3, for example along at least 9/10, of the height of the visible part of the window pane.

In some embodiments, the removable representation item extends substantially along the entire height of the visible part of the window pane.

In some embodiments, the window is a window to be installed at a position different from vertical, such as a roof window comprising an insulated glass unit arranged in the frame. By the window being installed at a position different from vertical, the scope of suitable window covering devices may be narrowed significantly, among others due to gravity acting on the covering device in a way that may necessitate a mechanical guiding solution to ensure that the covering device is operated correctly when covering the window pane as desired. Such a mechanical guiding solution may be provided by installing guide rails at the frame for guiding the covering portion of the window covering device. In such cases, the removable representation item and the identification item together may help the user with the necessary information to order a suitable window covering device.

In some embodiments, the frame comprises a movable sash connected to a fixation frame by means of a hinge system, and wherein the hinge system allows the sash to be opened and closed relative to the fixation frame.

In some embodiments, the visual representation of the window covering device is a graphical rendering, such as an image or a drawing of the window covering device.

In some embodiments, the visual representation of the window covering device illustrates a blind or a shutter, such as a roller blind, a venetian blind or a roller shutter, installed at the window.

In some embodiments, the visual representation of a window covering device comprises at least a visual representation of one or more of a covering portion, one or more guiding rails for guiding the covering portion along the length of the window, a housing for enclosing the unexpended part of the covering portion and/or a grip profile for grabbing and moving the covering portion. The visual representation of the covering portion may be a visual representation of a fabric or slats of a venetian blind. Alternatively or additionally, the visual representation of the covering portion may include the representation item being as opaque or dark as the covering portion.

Disclosed herein is, in a second aspect of the present disclosure, a window system comprising a plurality of windows, according to the first aspect, wherein the plurality of windows comprises at least a first set of windows and a second set of windows,
wherein the physical characteristics of the first set of windows are different from the physical characteristics of the second set of windows, and
wherein the identification data of the machine-readable identifier of the removable identification item of the first set of windows is different from the identification data of the machine-readable identifier of the removable identification item at the second set of windows.

The plurality of windows comprising at least a first set of windows and a second set of windows provide that each window, having a physical characteristic according to the first aspect, may be part of the first set of windows or the second set of windows. It is understood that the first set of windows comprises one plurality of windows and the second set of windows comprises another plurality of windows, wherein none of the windows in the first set of windows are comprised in the second set of windows and vice versa. Further, the physical characteristic of each of the windows in the first set of windows are understood to be different from the physical characteristic of each of the windows in the second set of windows and vice versa. For example, a first set of windows may comprise one plurality of windows each having a height of 140cm and a width of 78cm, and a second set of windows may comprise another plurality of windows having a height different from 140cm or a width different from 78cm.

In some embodiments, the different physical characteristics includes that the first set of windows have a window size different from a corresponding window size of the second set of windows. It is understood that a window size corresponding to another window size entails that the window size and the corresponding window sizes may be measured in an identical or corresponding manner, but that the sizes are different. Alternatively or additionally, a window size for a substantially non-rectangular pane may be different from a corresponding window size for a rectangular pane simply by such window sizes not having an identical or corresponding manner to be measured.

In some embodiments, the different physical characteristics includes that the first set of windows are of a different generation than the generation of the second set of windows. It is understood that the generation of a window generally relates to a time span and/or date range when that window model was produced, as e.g. indicated by the manufacturing information or model year provided in the identification data.

In some embodiments, the identification data of the machine-readable identifiers of the first set of windows is identical and/or the identification data of the machine-readable identifiers of the second set of windows is identical. The identification data provided by each of the machine-readable identifiers of the first set of windows may be identical to each other, e.g. by being mutually indistinguishable. Correspondingly, the identification data provided by each of the machine-readable identifiers of the second set of windows may be identical to each other, i.e. providing the same data.

In some embodiments, the plurality of windows comprises a plurality of windows of a first size and a plurality of windows of a second size, wherein the plurality of windows of the first size and/or the plurality of windows of the second size comprises different window generations, and wherein the machine-readable identifiers placed on windows of the same size, but of different window generations, comprises different identification data.

The present disclosure moreover relates to a method of directing a user to an online store by means of a mobile user terminal in order for a user to purchase a window covering device for installation at a window. The method comprises:
- providing a mobile user terminal at the location of the window, wherein the window comprises an identification item comprising at least one machine-readable identifier, wherein the machine readable identifier comprises an Uniform Resource Locator (URL) representation which is directed to a web address at the online store, and identification data of the window and/or identification data of the at least one window covering device,
- operating an automatic identification reader of the mobile user terminal so that the automatic identification reader reads the machine-readable identifier,
- obtaining the (URL) and the identification data based on the read machine readable identifier,
- providing the read identification data to a server at the web address by means of the mobile user terminal based on the read (URL) representation,
- presenting, at a display of the mobile user terminal, a web page result of window covering devices suitable for installation at the window based on the provided read identification data.

It is understood that in one or more aspects of the method, the window may be a window according to any one or more of the preceding aspects or embodiments.

In one or more aspects of the present disclosure, said window may comprise a removable representation item comprising a visual representation of a window covering device; and the presented window covering devices may be window covering devices represented by the visual representation.

In other aspects of the present disclosure, the removable representation item may be omitted.

In one or more aspects of the present disclosure, the identification item may be a removable identification item. In other aspects, the identification item may be an identification item that is configured to be maintained at a location of the window, such as at a location of the window frame at a vissible or non-vissible (when the sash of the window is closed in case it is configured to be opened) location, over the ifetime of the window. Hence, the machine-readable identifier may be read later on during the lifetime of the window, also after a removable representation item (if present) has been removed.

In one or more aspects of the present disclosure, the presented window covering devices are available for purchase through said online store.

In one or more aspects of the present disclosure, the presented window covering devices are selected at the server based on the forwarded identification data.

In one or more aspects of the present disclosure, the server may provide the web page result to be presented at the mobile user terminal, where the web page result is based at least in part on the forwarded identification data.

In one or more aspects of the present disclosure, the mobile user terminal comprises a software application which prompts the user to visit a web address based on the read URL representation, such as via an internet browser software application installed at the mobile user terminal.

### Brief description of the drawings

Aspects of the present disclosure will be described in the following with reference to the accompanying drawings in which exemplary embodiments are shown, wherein:
Figure 1 illustrates a window comprising a frame, a window pane arranged in the frame, a removable representation item comprising a visual representation covering a part of the pane and a removable identification item comprising a machine-readable identifier according to embodiments of the present disclosure.
Figure 2 illustrates a window comprising a frame, a window pane arranged in the frame and a removable representation item comprising a removable identification item according to further embodiments of the present disclosure.
Figure 3 illustrates a window comprising a frame, a window pane arranged in the frame, a removable representation item and a removable identification item arranged at separately removable abutting layers provided at a removable sheet according to one or more embodiments of the present disclosure.
Figure 4 illustrates a perspective view of a window in the form of a pivot roof window comprising a hinge system and window covering device mounted at the window according to one or more embodiments of the present disclosure.
Figure 5 illustrates a side view of a window in the form of a top-hung roof window comprising a hinge system and a window covering device mounted at the window according to one or more embodiments of the present disclosure.
Figure 6 illustrates a window system comprising a plurality of windows comprising a first set of windows and a second set of window with each window having physical characteristics according to embodiments of the present disclosure.
Figure 7 illustrates a portion of a window, such as e.g. illustrated in Figures 1-5, with a machine-readable identifier comprising a URL representation configured to provide identification data to a server at a web address when the machine-readable identifier is read by an automatic identification reader of a mobile user terminal.

### Detailed description

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

While the present disclosure has been described in detail in connection with only a limited number of embodiments or aspects, it should be readily understood that the present disclosure is not limited to such disclosed embodiments or aspects. Rather, the present disclosure can be modified to incorporate any number of variations, alterations, substitutions or equivalent arrangements not heretofore described, but which are commensurate in scope with the present disclosure. Additionally, while various embodiments or aspects of the present disclosure have been described, it is to be understood that aspects of the present disclosure may include only some of the described embodiments or aspects or combinations of the various embodiments or aspects. Accordingly, the present disclosure is not to be seen as limited by the foregoing description.

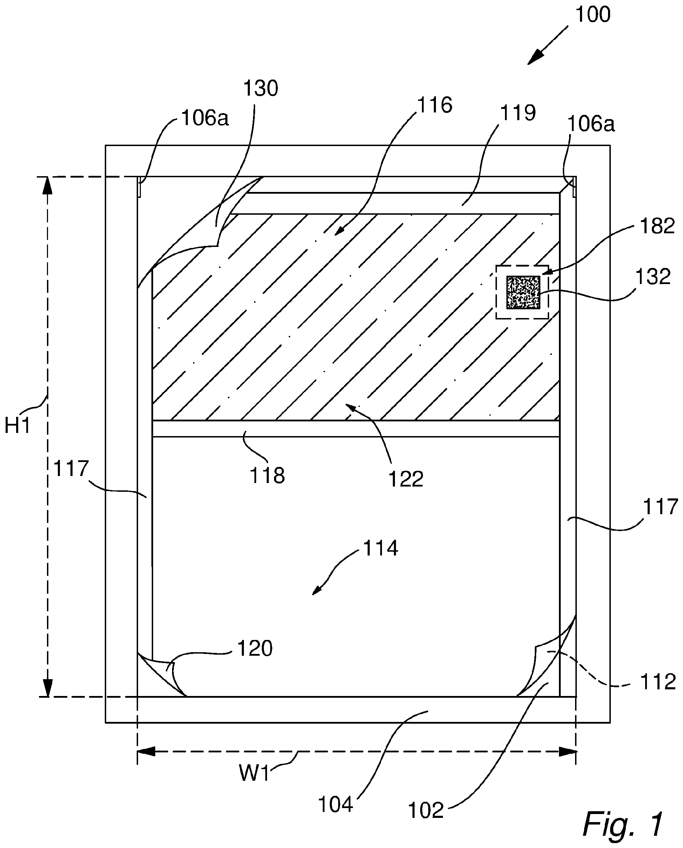

Figure 1 is a graphical illustration of a window 100 for a building, such as an architectural window, according to one or more embodiments of the present disclosure. The window 100 is shown with a window frame 104 and a window pane 102 arranged in said window frame 104. The pane 102 is shown as a substantially rectangular glass panel and has a visible part adjoining the frame, where the visible part is shown as a rectangle defined by a height H1 and a width W1. The frame 104 is shown comprising two first fastening mechanisms 106a provided at the upper corners of the frame 104 for mounting accessories, such as covering devices.

A removable representation item 120, such as a printed plastic film, is shown removably attached to the surface of the window pane 102 at an interior side of the window 100. The representation item 120 is attached to the surface of the window pane 102 by a weak adhesive film (not illustrated) between the representation item 120 and the pane 102. The representation item 120 is shown comprising a visual representation 122 of a window covering device 110 (not illustrated) installed at the window 100. The removable representation item 120 is shown covering the visible part of the window pane 102, so that a display part 116 of said covered area provides the visual representation 122 and a clear part 114 provides a substantially unhindered view through the pane 102. The display part 116 is shown as opaque and/or generally less transparent than the clear part 114, which is transparent or at least translucent. The visual representation 122 illustrates two guide rails 117, a grip profile 118 and a housing 119 of the window covering device 110 (not illustrated). The guide rails 117 are shown extending along a longitudinal extent of the window frame 104, where the visible part of the pane 102 meets the window frame 104. The grip profile 118 is also shown extending along a transversal and/or substantially horizontal direction across the pane 102 between two opposite sides of the window frame 104. As shown here, the visual representation 122 hereby provides a decent two-dimensional mock-up of the window covering device 110 (not illustrated) in the form of interior blinds as they would appear if installed at the window 100 and viewed through the pane 102. It is contemplated that the display part 116 could have a printed pattern or be otherwise textured to look like a textile or a non-woven fabric typically used in roller blinds. Further, the visual representation 122 shown need not be photorealistic nor provide a complete graphical rendering or reproduction of the type of window covering device 110 (not illustrated) illustrated by the visual representation 122, as long as the user is helped to a reasonable understanding of how the window 100 would look with that type of window covering device 110 (not illustrated) installed at the window 100.

A removable identification item 130 is likewise shown removably attached at the surface of the window pane 102 at an interior side of the window 100. Similarly, the identification item 130 is attached at the surface of the window pane 102 by a weak adhesive film (not illustrated), such as between the identification item 130 and the representation item 120 or between the identification item 130 and the pane 102. The removable identification item 130 is shown comprising at least one machine-readable identifier 132. The machine-readable identifier 132 provides machine-readable data, such as window identification data or data relating to the window manufacturer or a vendor, which helps to improve the user experience when an end user wants to order window accessories, such as window covering devices, by using or relaying the data. The machine-readable identifier 132 of the present embodiment is a QR code which comprises data in the form of a web address 182 which is directed to an online store. At this online store, consumers like the end users can purchase window accessories, such as interior blinds, suitable for that window 100. By directing the end user to an online store specifically offering for sale that type of window covering device 110 (not illustrated) which is illustrated by the visual representation 122 at the window 100, the end user may be provided with an enhanced user experience by both being assured that the type fits the window 100 and understanding how it will look.

A removable sheet 112 is shown removably attached the surface of the window pane 102 at an exterior side of the window 100 and arranged to be substantially opposite the removable representation item 120 and/or the removable identification item 130. Optionally, the removable sheet 112, such as clear plastic or polymer film, shown here removably attached over at least the visible part of the window pane 102, such as over the removable representation item 120, may be separately removed after the installation of the window e.g. by a glazier prior to the end user viewing the visual representation 122. It is contemplated that clear and durable removable sheets 112 may be arranged as two outermost protective layers entirely covering the visible part of the pane 102, and that the removable sheets 112 may be peeled off while leaving the removable representation item 120 and/or the removable identification item 130. Such an arrangement of removable sheets 112 may provide that neither the pane 102, the removable representation item 120 nor the removable identification item 130 are damaged during packaging, transportation and/or installation of the window 100.

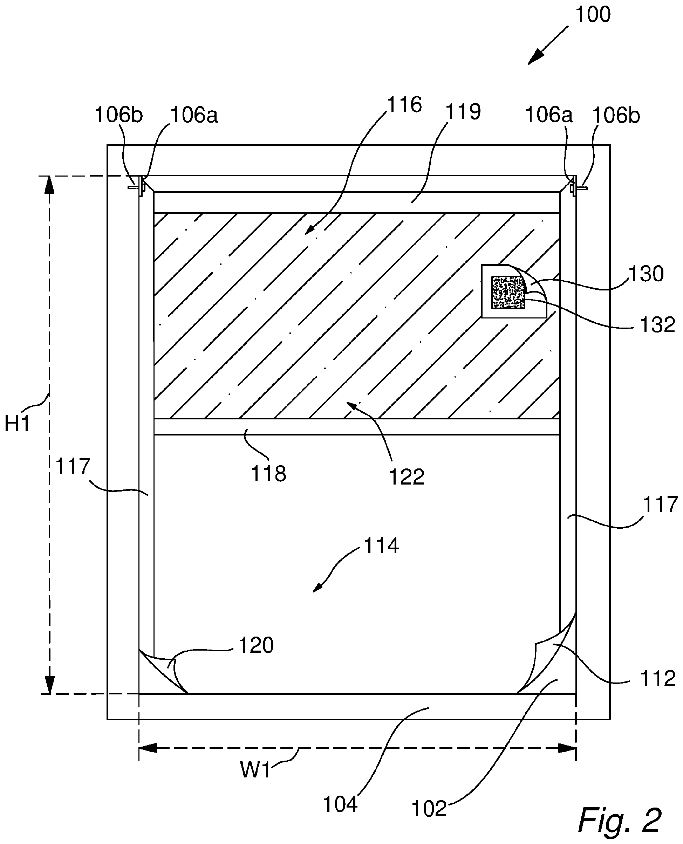

Figure 2 is a graphical illustration of a window 100 in an embodiment of the present disclosure, wherein the window 100 comprises a frame 104, a pane 102 arranged in the frame 104 and a removable representation item 120. The representation item 120 likewise comprises a visual representation 122 of a window covering device 110 (not illustrated) installed at the window 100 at a display part 116, as e.g. also described in relation to Fig. 1 above. The removable representation item 120 is shown comprising a removable identification item 130, which covers only a fraction of the display part 116 which provides the visual representation 122. The frame 104 is likewise shown comprising two first fastening mechanisms 106a provided at the upper corners of the frame 104 for mounting a type of window covering device 110 (not illustrated) and the upper corners of the visual representation 122 here illustrate two corresponding second fastening mechanisms 106b, such as screws for rigidly affixing a pair of brackets to the window frame 104.

A removable sheet 112, such as a foil or plastic sheet, is shown removably attached to a surface of the window pane 102 at an interior side of the window 100. The sheet 112 is attached to the surface of the window pane 102 by a weak adhesive film (not illustrated) between the sheet 112 and the pane 102, so that the removable sheet 112 provides a protective layer covering the entire visible part of the window pane 102. The removable representation item 120 shown here is a part of the removable sheet 112 attached at the window pane 102, such as by the removable representation item 120 being a thin film of ink or colour pigment printed on the removable sheet 112. The removable sheet 112 hereby provides that the representation item 120 and/or the identification item 130 can be removed from the window pane 102 without residue.

The removable representation item 120 is shown removably attached to the surface of the window pane 102 at an interior side of the window 100, as e.g. also described above in relation to Fig. 1, but the removable identification item 130 is here shown removably attached to the removable representation item 120, such as with a weak adhesive between at the identification item 130 and the representation item 120. The removable identification item 130 also comprises a machine-readable identifier 132 and is generally smaller, as e.g. compared to the removable identification item 130 described above in relation to Fig. 1, such as e.g. a 10 x 10 cm QR code sticker. By the removable identification item 130 being removable attached to representation item 120, the end user may peel off this identification item 130 to use the machine-readable identifier 132 elsewhere and leave the representation item 120 in place. This may provide the advantage that the window 100 is left with a general appearance of having a window covering device 110 (not illustrated) installed at the window 100 due to the visual representation 122 while the end user waits for the purchased type of window covering device 110 (not illustrated) to arrive and/or be installed.

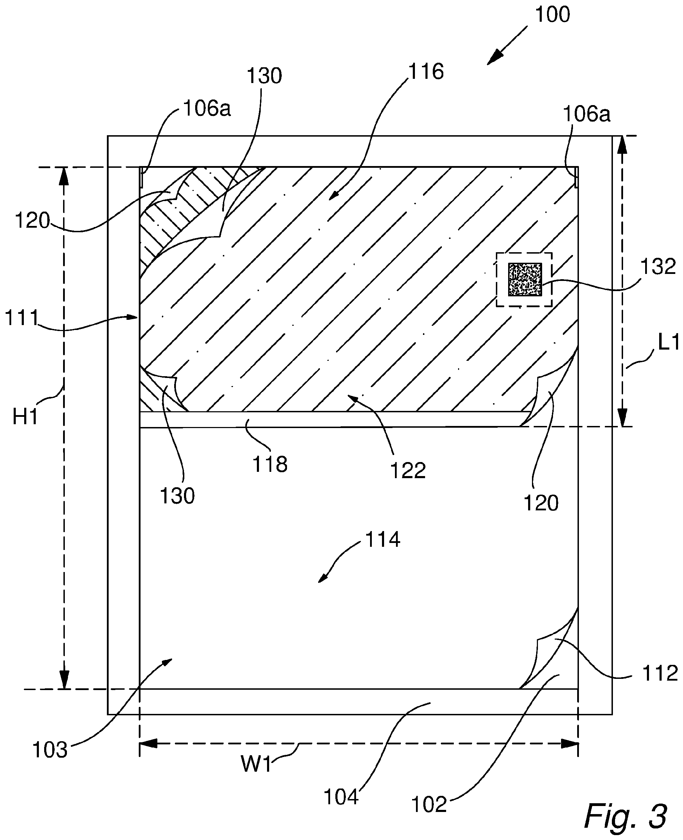

Figure 3 is a graphical illustration of a window 100 in another embodiment of the present disclosure, wherein the window 100 likewise comprises a frame 104, a pane 102 arranged in the frame 104 and a removable representation item 120. Further, the representation item 120 comprises a visual representation 122 of a window covering device 110 (not illustrated) installed at the window 100 at a display part 116, as e.g. also described in relation to Figs. 1-2 above. The removable representation item 120 is shown comprising a removable identification item 130, which covers a majority of the display part 116 which provides the visual representation 122. Here, the window covering device 110 (not illustrated) illustrated by the visual representation 122 also comprises a grip profile 118 but no guide rails 117 or housing 119 is shown.

A removable representation item 120 is shown covering an upper part of the pane 102 and/or the removable sheet 112. The removable representation item 120 extends along a length L1 measured from the top of the window frame 104 to the bottom of the grip profile 118 illustrated by the visual representation 122 of the representation item 120 as placed at the window. The length L1 is generally less than the height H1 of the visible part 103 of the pane 102, and typically a considerable fraction, e.g. 1/2, to display the covering part 111 of the window covering device 110 (not illustrated).

A removable sheet 112, such as a foil or plastic sheet, is shown removably attached to a surface of the window pane 102 at an interior side of the window 100. The sheet 112 is attached to the surface of the window pane 102 by a weak adhesive film (not illustrated) between the sheet 112 and the pane 102, so that the removable sheet 112 provides a protective layer covering the entire visible part of the window pane 102.

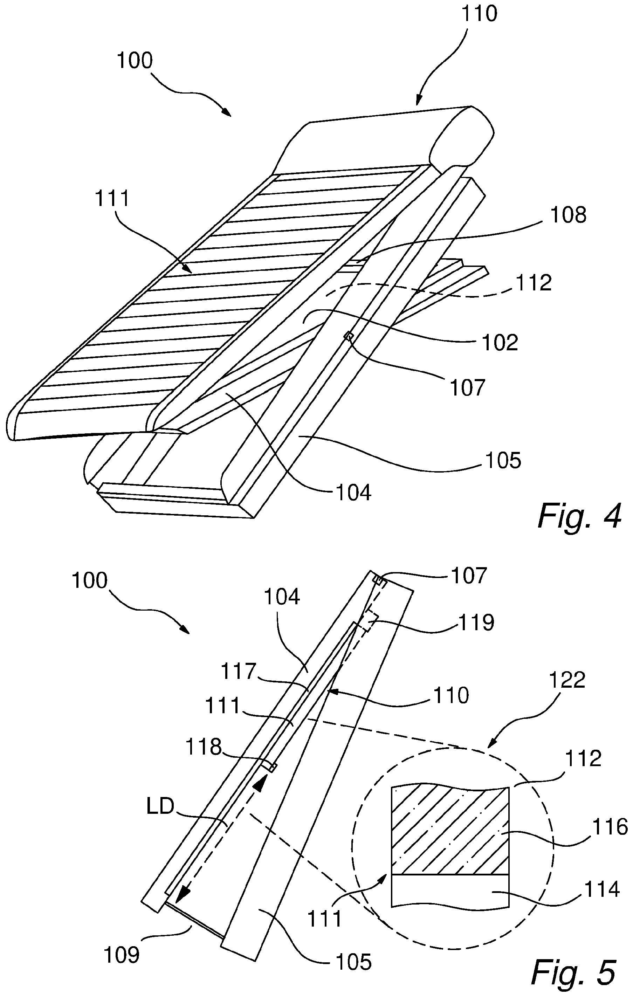

Figure 4 is an illustration of a perspective view of a window 100 to be installed at a roof of a building. The roof window 100 comprises a window frame 104, a pane 102 arranged in the frame 104, a hinge system 107 arranged between the window frame 104 and a fixation frame 105 arranged to receive the frame 104. In the example of Fig. 4, the roof window 100 is a pivot roof windows comprising pivot hinges 107 providing an axis of rotation between the top and bottom end of the frame 104. The pivot roof window 100 comprises a frame 104 in the form of a movable sash 108, which is connected to the fixation frame 105 by means of the hinge system 107, such as one or more hinged connections configured to allow the sash 108 to move relative to the fixation frame 105. Often the axis of rotation is substantially about the centre, but sometimes the axis of rotation can for example be raised such as 1/3 of the total window or sash height. The hinge system 107 is arranged so that a top end part of the sash 108 is configured to move inwards while a bottom end part of the sash 108 is configured to move outwards when opening the window 100 from a closed position. The roof window 100 is configured to be placed in a roofing structure of a building, such as a building for habitants, an office building or the like. The roof window 100 may in embodiments of the present disclosure be arranged between two roof trusses, but may in further embodiments also be arranged at another part of the roof structure. The pivot roof window 100 may either be configured to be arranged with an angle between 5° and 85°, such as between 10° and 75°, compared to horizontal, so that rain and melting water, dew and the like will be guided towards a bottom end part of the pivot roof window 100 due to gravity without permitting water ingress.

A pivot roof window 100 may e.g. allow partial rotation of the movable sash 108 so the surface of the window pane 102 at an exterior side of the pivot roof window 100 may be cleaned from the inside. The weather proofing and water drain for such roof windows 100 should be carefully designed, especially for pivot roof windows 100 that can be opened, which may affect the availability of compatible architectural coverings that can be installed at the respective type of pivot roof window 100.

The pivot roof window 100 is shown with an architectural covering installed at an exterior side. The architectural covering is shown as a window covering device 110, which in the present example is a roller shutter, but it may also be a blind such as a venetian blind, a roller blind or the like in further embodiments. The roller shutter may be electrically operated by means of an electric motor (not illustrated), so as to open or close the roller shutter and controlled by an automation solution and/or by means of a wired or wireless remote control. As can be seen, the roller shutter can be placed at the exterior side of the window, and a covering part 111 can be extended or retracted along a longitudinal direction of the window covering device 110 while at least a housing of the window covering device 110, e.g. at the top end part, remains stationary. It is understood that in further embodiments of the present disclosure, the roller shutter and/or other types of architectural coverings may be omitted from the window 100. The window pane 102 may instead be covered by a removable sheet 112 to provide a visual representation 122 (not shown) of at least the covering part 111, as e.g. described above in relation to Figs. 1-3, to be viewed by an end user.

Figure 5 is an illustration of a side view of a roof window 100 according to another embodiment of the present disclosure, wherein the roof window 100 is a top-hung roof window. The top-hung roof window 100 comprises a window frame 104, a pane 102 (not shown) arranged in the frame 104, a hinge system 107 arranged between the window frame 104 and a fixation frame 105 arranged to receive the frame 104. Here, the frame 104 is connected to the fixation frame 105 at the top part by a hinge system 107, and the top part of the frame 104 does not pivot inwards when the window 100 is opened from a closed position. A latch mechanism 109 is shown at the bottom part of the frame 104, where the latch mechanism 109 is engaged with a corresponding receiving mechanism (not shown) at the bottom part of the fixation frame 105 so that the window 100 can be mechanically actuated, shut or held in position.

Generally, for some types of roof windows 100, such as e.g. illustrated in relation to Figs. 4 and 5 above, the roof window 100 may be installed with an electric actuator (not shown) such as a spindle actuator or chain actuator. The electric actuator can be controlled or operated via input from an automation system or a user interface via a wired or wireless remote control to open or closed the window 100. Similarly, some types of window covering devices 100, such as roller blinds or exterior shutters, may be installed with an electric actuator which can be controlled or operated in this way.

The top-hung roof window 100 is shown with an architectural covering installed at an interior side. The architectural covering is shown as a window covering device 110, which in the present example is roller blinds, but it may also be venetian blinds, slats or the like in further embodiments. The window covering device 110 is shown with a covering portion 111 drawn approximately mid-way between the top part and bottom part of the window frame 104 along a longitudinal direction LD. The window frame 104 has one or more guiding rails 117 for guiding at least the covering portion 111 and to keep the covering part 111 along the length of the window frame 104. The window covering device 110 comprises a housing 119 for enclosing the unexpended part of the covering portion 111 and a grip profile 118 for grabbing and moving the covering portion 111, such as by linear extension during manual operation by a user.

The circular inset in Fig. 5 shows a visual representation 122 of the window covering device 110 installed at the top-hung roof window 100 as it would look when viewed from an interior side of the top-hung roof window 100 by an end user. Such a visual representation 122 may be provided at a removable sheet 112 attached to the window pane 102 (not shown) of the top-hung roof window 100, as e.g. described in relation to Figs. 1-3 above. The removable sheet 112 has a display part 116, which provides a graphical representation of at least the covering portion 111 of the window covering device 110. The removable sheet 112 also has a clear part 114, which may provide a substantially unhindered view through the pane 102 (not shown). It is understood that, a removable representation item 120 (not shown) and a removable identification item 130 (not shown) may be provided e.g. by the removable sheet 112 being a foil or plastic sheet removably attached to a surface of the window pane 102 (not shown), whereby one or more of the effects or advantages discussed above may be provided.

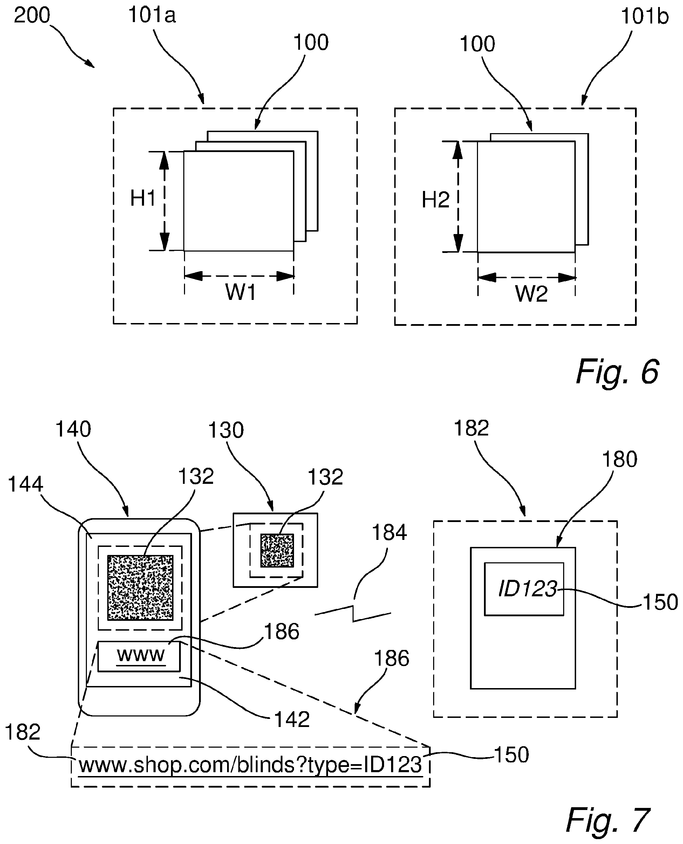

Figure 6 is a graphical illustration of a window system 200 comprising a plurality of windows 100, such as at least ten windows 100, such as more than 50 windows 100. The plurality of windows 100 comprises a first set of windows 101a, here shown as three identical windows 100 of a first size, and a second set of window 101b, shown as two identical windows 100 of a second size. Each window 100 is shown having physical characteristics comprising a height H1,H2 and a width W1,W2 according to embodiments of the present disclosure, such as e.g. described in relation to Figs. 1-3. It is understood that the first size is described at least in part by height H1 and width W1 measured as shown for the three identical windows 100 of the first size. Further, the second size is described at least in part by height H2 and width W2 measured as shown for the two identical windows 100 of the second size, and it is understood that the second size being different from the first size may include that at least the height H1 is different from the height H2 or the width W1 is different from the width W2.

Figure 7 is a graphical illustration of a removable identification item 130 from a portion of a window 100 according to one or more embodiments of the present disclosure, such as e.g. illustrated in relation to Figs. 1-5 above, with a machine-readable identifier 132 being read by an automatic identification reader 142 of a mobile user terminal 140, such as a smartphone held and/or operated by a user. The machine-readable identifier 132 may be scanned and read automatically or manually as a result of user interaction via a user interface at the mobile user terminal 140. The machine-readable identifier 132 is shown as a QR code, which can be scanned by the mobile user terminal 140 recording or receiving a digital image of the QR code via a digital camera, such as typically provided in a smartphone, tablet or the like.

A display 144 is provided at the mobile user terminal 140 so that an automatic identification reader 142 installed at the mobile user terminal 140 may provide information and/or enable user interaction, such as via a touch screen interface. It is understood that the mobile user terminal 140 may comprise a hardware processor and other electronic components for carrying out the functions e.g. described above, such as performing QR code recognition, data processing and information retrieval, such as providing information and/or enabling user interaction at the display 144.

It is naturally generally understood that the mobile user terminal 140 may comprise data communication means, such as adapted for WIFI, Bluetooth^{®}, mobile data such as 3G, 4G, or 5G data communication and/or any other suitable data communication means, in order to be able to communicate with servers and the like.

The machine-readable identifier 132 is shown comprising a URL representation 186. The URL representation 186 is shown configured to provide identification data 150, such as e.g. window identification data relating to the window 100 from which the identification item 130 was removed, to a server 180 at a web address 182 by the web address 182 and the identification data 150 forming a http GET request string. The server 180 may fulfil the http GET request by providing a web page result which is based at least in part on the identification data 150 to provide the user with an improved the user experience for users that may have a desire of purchasing window accessories, such as window covering devices 110, for the respective window 100.

It is understood that in some embodiments of the present disclosure, e.g. in accordance with one or more of the above mentioned points, the removable representation item may be omitted from the window and not be installed/attached at all at/to the window.

### References

- 100: Window
- 101a,b: Set of windows
- 102: Window pane
- 103: Visible part
- 104: Frame
- 105: Fixation frame
- 106a,b: Fastening mechanism
- 107: Hinge system
- 108: Sash
- 109: Latch mechanism
- 110: Window covering device
- 111: Covering portion
- 112: Removable sheet
- 114: Clear part
- 116: Display part
- 117: Guide rail
- 118: Grip profile
- 119: Housing
- 120: Removable representation item
- 122: Visual representation
- 130: Removable identification item
- 132: Machine-readable identifier
- 140: Mobile user terminal
- 142: Automatic identification reader
- 144: Display
- 150: Identification data
- 180: Server
- 182: Web address
- 184: Communication
- 186: URL representation
- 200: Window system
- H1,H2: Height
- L1: Length
- LD: Longitudinal direction
- W1,W2: Width

## Claims

1. A method of directing a user to an online store by means of a mobile user terminal in order for a user to purchase a window covering device at an online store for installation at a window such as a roof window, for a building, wherein the window (100) comprises:
- a window pane (102) and a frame (104), wherein the pane (102) is arranged in the frame (104);
the method comprising the steps of
providing a removable representation item (120) comprising a visual representation (122) of a window covering device (110), wherein the removable representation item (120) covers at least a first part of the window pane (102), and wherein the visual representation (122) illustrates a window covering device (110) mounted at the window (100),
providing the window with a removable identification item (120,130) comprising at least one machine-readable identifier (132), wherein the machine-readable identifier (132) comprises a Uniform Resource Locator (URL) representation (186) which is directed to a web address (182), and wherein the machine-readable identifier (132) comprises identification data (150) of the window (100) and/or identification data (150) of the at least one window covering device (110) represented by the visual representation (122),
providing a mobile user terminal (140) at the location of the window,
operating an automatic identification reader (142) of the mobile user terminal so that the automatic identification reader (142) reads the machine-readable identifier (132), obtaining the Uniform Resource Locator (URL) and the identification data based on the read machine readable identifier, wherein said web address is a web address at an online store,
providing the read identification data (150) to a server (180) at the web address (182) by means of the mobile user terminal (14) based on the read Uniform Resource Locator (URL) representation (186), and
presenting, at a display of the mobile user terminal, a web page result of window covering devices (110) suitable for installation at the window based on the provided read identification data (150), wherein the window covering devices (110) presented at the display are available for purchase through said online store.

2. A method according to claim 1, wherein the Uniform Resource Locator (URL) representation (186) provides the identification data (150) to a server (180) at a web address (182) when the machine-readable identifier (132) is read by an automatic identification reader (142) of a mobile user terminal (140).

3. A method according to any of the preceding claims, wherein the Uniform Resource Locator (URL) representation (186) comprises the identification data (150).

4. A method according to claim 3, wherein the identification data (150) is appended to the web address (182) and/or wherein the identification data is included in the web address as part of a Hypertext Transfer Protocol (http) request to the server.

5. A method according to any of the preceding claims, wherein the machine-readable identifier (132) comprises a Quick Response (QR) code provided at, such as printed on, the removable identification item (120,130), wherein the Quick Response (QR) code comprises the identification data (150).

6. A method according to any of the preceding claims, wherein the identification data (150) comprises one or more of:
- product type information,
- product size information,
- product manufacturing information,
- product accessory category information and/or
- product material information
related to the window (100) and/or the window covering device (110).

7. A method according to any of the preceding claims, wherein the frame (104) comprises a first fastening mechanism (106a) configured to engage with a second fastening mechanism (106b) of at least one window covering device (110) of a type represented by the visual representation (122) at the removable representation item (120).

8. A method according to any of the preceding claims, wherein the machine-readable identifier (132) comprises identification data (150) of the window covering device (110).

9. A method according to claim 8, wherein the identification data (150) comprises a window covering type information which corresponds to a type of the window covering device (110) compliant with the physical characteristic of the window (100) at which the removable representation item (120) is arranged.

10. A method according to claim 8 or 9, wherein the identification data (150) of the window covering device (110) comprises one or more of a window covering size information, a window covering type information and/or a window covering colour information.

11. A method according to any of the preceding claims, wherein the visual representation (122) illustrates a substantially full size window covering device (110), such as wherein the visual representation (122) substantially has a size corresponding to a full size window covering device (110).

12. A method according to any of the preceding claims, wherein at least one of the removable representation item (120) and the removable identification item (120,130) is a removable sheet (112), such as a foil or plastic sheet, which is removably attached to a surface of the window pane (102).

13. A method according to any of the preceding claims, wherein the removable representation item (120) extends substantially along the entire width (W1) of the visible part (103) of the window pane (102) such as wherein the visual representation (122) of the removable representation item (120) extends substantially along the entire width (W1) of the visible part (103) of the window pane (102).

14. A method according to any of the preceding claims, wherein the identification data is represented by predetermined codes.

15. A method according to any of the preceding claims, wherein the presented window covering devices are selected at the server based on the forwarded identification data,
and/or
wherein the server provides the web page result to be presented at the mobile user terminal, where the web page result is based at least in part on the forwarded identification data.

16. A method according to any of the preceding claims, wherein the presented window covering devices (110) are window covering devices (110) represented by the visual representation (122).

## Patentansprüche

1. Verfahren zum Leiten eines Benutzers zu einem Online-Shop durch ein mobiles Benutzerendgerät, damit ein Benutzer eine Fensterabdeckungsvorrichtung in einem Online-Shop zur Installation an einem Fenster, wie etwa einem Dachfenster, für ein Gebäude erwerben kann, wobei das Fenster (100) Folgendes umfasst:
eine Fensterscheibe (102) und einen Rahmen (104), wobei die Scheibe (102) in dem Rahmen (104) angeordnet ist;
wobei das Verfahren die folgenden Schritte umfasst
Bereitstellen eines abnehmbaren Darstellungselements (120), umfassend eine visuelle Darstellung (122) einer Fensterabdeckungsvorrichtung (110), wobei das abnehmbare Darstellungselement (120) mindestens einen ersten Teil der Fensterscheibe (102) abdeckt und wobei die visuelle Darstellung (122) eine an dem Fenster (100) montierte Fensterabdeckungsvorrichtung (110) veranschaulicht,
Bereitstellen des Fensters mit einem entfernbaren Kennzeichnungselement (120, 130), umfassend mindestens eine maschinenlesbare Kennung (132), wobei die maschinenlesbare Kennung (132) eine Uniform-Resource-Locator-(URL-)Darstellung (186) umfasst, die sich auf eine Webadresse (182) richtet, und wobei die maschinenlesbare Kennung (132) Kennzeichnungsdaten (150) des Fensters (100) und/oder Kennzeichnungsdaten (150) der mindestens einen Fensterabdeckungsvorrichtung (110) umfasst, die durch die visuelle Darstellung (122) dargestellt sind,
Bereitstellen eines mobilen Benutzerendgeräts (140) an der Position des Fensters,
Betreiben eines automatischen Kennzeichnungslesers (142) des mobilen Benutzerendgeräts, so dass der automatische Kennzeichnungsleser (142) die maschinenlesbare Kennung (132) liest, Erlangen des Uniform Resource Locator (URL) und der Kennzeichnungsdaten, basierend auf der gelesenen maschinenlesbaren Kennung, wobei die Webadresse eine Webadresse bei einem Online-Geschäft ist,
Bereitstellen der gelesenen Kennzeichnungsdaten (150) an einen Server (180) an der Webadresse (182) durch das mobile Benutzerendgerät (14), basierend auf der gelesenen Uniform-Resource-Locator-(URL-)Darstellung (186), und
Darstellen eines Webseitenergebnisses von Fensterabdeckungsvorrichtungen (110), die für eine Installation an dem Fenster geeignet sind, basierend auf den bereitgestellten gelesenen Kennzeichnungsdaten (150), auf einer Anzeige des mobilen Benutzerendgeräts, wobei die auf der Anzeige dargestellten Fensterabdeckungsvorrichtungen (110) zum Kauf über den Online-Store verfügbar sind.

2. Verfahren nach Anspruch 1, wobei die Uniform-Resource-Locator- (URL-) Darstellung (186) die Kennzeichnungsdaten (150) an einen Server (180) unter einer Webadresse (182) bereitstellt, wenn die maschinenlesbare Kennung (132) von einem automatischen Kennzeichnungsleser (142) eines mobilen Benutzerendgeräts (140) gelesen wird.

3. Verfahren nach einem der vorhergehenden Ansprüche, wobei die Uniform-Resource-Locator-(URL-)Darstellung (186) die Kennzeichnungsdaten (150) umfasst.

4. Verfahren nach Anspruch 3, wobei die Kennzeichnungsdaten (150) an die Webadresse (182) angehängt werden und/oder wobei die Kennzeichnungsdaten in der Webadresse als Teil einer Hypertext-Transfer-Protocol-(http-)Anfrage an den Server beinhaltet sind.

5. Verfahren nach einem der vorhergehenden Ansprüche, wobei die maschinenlesbare Kennung (132) einen Quick-Response-(QR-)Code umfasst, der auf dem entfernbaren Kennzeichnungselement (120, 130) bereitgestellt, wie etwa aufgedruckt, ist, wobei der Quick-Response-(QR-)Code die Kennzeichnungsdaten (150) umfasst.

6. Verfahren nach einem der vorhergehenden Ansprüche, wobei die Kennzeichnungsdaten (150) eines oder mehrere von Folgendem umfassen:
Produkttypinformationen,
Produktgrößeninformationen,
Produktherstellungsinformationen,
Produktzubehörkategorieinformationen und/oder
Produktmaterialinformationen
in Bezug auf das Fenster (100) und/oder die Fensterabdeckungsvorrichtung (110).

7. Verfahren nach einem der vorhergehenden Ansprüche, wobei der Rahmen (104) einen ersten Befestigungsmechanismus (106a) umfasst, der konfiguriert ist, um mit einem zweiten Befestigungsmechanismus (106b) von mindestens einer Fensterabdeckungsvorrichtung (110) eines Typs, der durch die visuelle Darstellung (122) an dem abnehmbaren Darstellungselement (120) dargestellt ist, in Eingriff zu kommen.

8. Verfahren nach einem der vorhergehenden Ansprüche, wobei die maschinenlesbare Kennung (132) Kennzeichnungsdaten (150) der Fensterabdeckungsvorrichtung (110) umfasst.

9. Verfahren nach Anspruch 8, wobei die Kennzeichnungsdaten (150) Fensterabdeckungstypeninformationen umfassen, die einem Typ der Fensterabdeckungsvorrichtung (110) entsprechen, der mit dem physikalischen Merkmal des Fensters (100) übereinstimmt, an dem das abnehmbare Darstellungselement (120) angeordnet ist.

10. Verfahren nach Anspruch 8 oder 9, wobei die Kennzeichnungsdaten (150) der Fensterabdeckungsvorrichtung (110) eines oder mehrere von Fensterabdeckungsgrößeninformationen, Fensterabdeckungstypeninformationen und/oder Fensterabdeckungsfarbinformationen umfassen.

11. Verfahren nach einem der vorhergehenden Ansprüche, wobei die visuelle Darstellung (122) eine Fensterabdeckungsvorrichtung (110) in im Wesentlichen voller Größe veranschaulicht, wie etwa wobei die visuelle Darstellung (122) im Wesentlichen eine Größe aufweist, die einer Fensterabdeckungsvorrichtung (110) in voller Größe entspricht.

12. Verfahren nach einem der vorhergehenden Ansprüche, wobei mindestens eines des abnehmbaren Darstellungselements (120) und des abnehmbaren Kennzeichnungselements (120, 130) eine abnehmbare Platte (112), wie etwa eine Folie oder Kunststoffplatte, ist, die abnehmbar an einer Oberfläche der Fensterscheibe (102) angebracht ist.

13. Verfahren nach einem der vorhergehenden Ansprüche, wobei sich das abnehmbare Darstellungselement (120) im Wesentlichen entlang der gesamten Breite (W1) des sichtbaren Teils (103) der Fensterscheibe (102) erstreckt, wie etwa wobei sich die visuelle Darstellung (122) des abnehmbaren Darstellungselements (120) im Wesentlichen entlang der gesamten Breite (W1) des sichtbaren Teils (103) der Fensterscheibe (102) erstreckt.

14. Verfahren nach einem der vorhergehenden Ansprüche, wobei die Kennzeichnungsdaten durch vorbestimmte Codes dargestellt werden.

15. Verfahren nach einem der vorhergehenden Ansprüche, wobei die dargestellten Fensterabdeckungen auf dem Server, basierend auf den weitergeleiteten Kennzeichnungsdaten, ausgewählt werden
und/oder
wobei der Server das Webseitenergebnis bereitstellt, das auf dem mobilen Benutzerendgerät dargestellt werden soll, wobei das Webseitenergebnis mindestens teilweise auf den weitergeleiteten Kennzeichnungsdaten basiert.

16. Verfahren nach einem der vorhergehenden Ansprüche, wobei die dargestellten Fensterabdeckungsvorrichtungen (110) Fensterabdeckungsvorrichtungen (110) sind, die durch die visuelle Darstellung (122) dargestellt werden.

## Revendications

1. Procédé d'orientation d'un utilisateur vers une boutique en ligne au moyen d'un terminal mobile utilisateur afin qu'un utilisateur achète un dispositif de recouvrement de fenêtre dans une boutique en ligne pour une installation sur une fenêtre telle qu'une fenêtre de toit, pour un bâtiment, dans lequel la fenêtre (100) comprend :
- une vitre (102) et un cadre (104), dans lequel la vitre (102) est disposée dans le cadre (104) ;
le procédé comprenant les étapes consistant à :
fournir un élément de représentation amovible (120) comprenant une représentation visuelle (122) d'un dispositif de recouvrement de fenêtre (110), dans lequel l'élément de représentation amovible (120) recouvrant au moins une première partie de la vitre (102), et dans lequel la représentation visuelle (122) illustre un dispositif de recouvrement de fenêtre (110) monté sur la fenêtre (100),
fournir à la fenêtre un élément d'identification amovible (120, 130) comprenant au moins un identifiant lisible par machine (132), dans lequel l'identifiant lisible par machine (132) comprend une représentation d'un localisateur uniforme de ressource (URL) (186) renvoyant vers une adresse Web (182), et dans lequel l'identifiant lisible par machine (132) comprend des données d'identification (150) de la fenêtre (100) et/ou des données d'identification (150) de l'au moins un dispositif de recouvrement de fenêtre (110) représenté par la représentation visuelle (122),
fournir un terminal mobile utilisateur (140) à l'emplacement de la fenêtre,
faire fonctionner un lecteur d'identification automatique (142) du terminal mobile utilisateur de sorte que le lecteur d'identification automatique (142) lit l'identifiant lisible par machine (132),
obtenir le localisateur uniforme de ressource (URL) et les données d'identification sur la base de l'identifiant lisible par machine lu, dans lequel ladite adresse Web est une adresse Web d'une boutique en ligne,
fournir les données d'identification lues (150) à un serveur (180) à l'adresse Web (182) au moyen du terminal mobile utilisateur (14) sur la base de la représentation lue du localisateur uniforme de ressource (URL) (186), et
présenter, sur un écran du terminal mobile utilisateur, un résultat de page Web de dispositifs de recouvrement de fenêtre (110) appropriés pour une installation à la fenêtre sur la base des données d'identification lues fournies (150), dans lequel les dispositifs de recouvrement de fenêtre (110) présentés sur l'écran sont disponibles à l'achat via ladite boutique en ligne.

2. Procédé selon la revendication 1, dans lequel la représentation du localisateur uniforme de ressource (URL) (186) fournit les données d'identification (150) à un serveur (180) à une adresse Web (182) lorsque l'identifiant lisible par machine (132) est lu par un lecteur d'identification automatique (142) d'un terminal mobile utilisateur (140).

3. Procédé selon l'une quelconque des revendications précédentes, dans lequel la représentation du localisateur uniforme de ressource (URL) (186) comprend les données d'identification (150).

4. Procédé selon la revendication 3, dans lequel les données d'identification (150) sont ajoutées à l'adresse Web (182) et/ou dans lequel les données d'identification sont incluses dans l'adresse Web dans le cadre d'une requête de protocole de transfert hypertexte (http) adressée au serveur.

5. Procédé selon l'une quelconque des revendications précédentes, dans lequel l'identifiant lisible par machine (132) comprend un code à réponse rapide (QR) fourni sur, par exemple imprimé sur, l'élément d'identification amovible (120, 130), dans lequel le code à réponse rapide (QR) comprend les données d'identification (150).

6. Procédé selon l'une quelconque des revendications précédentes, dans lequel les données d'identification (150) comprennent l'un ou plusieurs des éléments suivants :
- des informations sur le type du produit,
- des informations sur la taille du produit,
- des informations sur la fabrication du produit,
- des informations sur la catégorie d'accessoire du produit et/ou
- des informations sur le matériau du produit
relatif à la fenêtre (100) et/ou au dispositif de recouvrement de fenêtre (110).

7. Procédé selon l'une quelconque des revendications précédentes, dans lequel le cadre (104) comprend un premier mécanisme de fixation (106a) configuré pour entrer en contact avec un second mécanisme de fixation (106b) d'au moins un dispositif de recouvrement de fenêtre (110) d'un type représenté par la représentation visuelle (122) au niveau de l'élément de représentation amovible (120).

8. Procédé selon l'une quelconque des revendications précédentes, dans lequel l'identifiant lisible par machine (132) comprend des données d'identification (150) du dispositif de recouvrement de fenêtre (110).

9. Procédé selon la revendication 8, dans lequel les données d'identification (150) comprennent des informations sur de type de recouvrement de fenêtre correspondant à un type de dispositif de recouvrement de fenêtre (110) compatible avec la caractéristique physique de la fenêtre (100) au niveau de laquelle l'élément de représentation amovible (120) est disposé.

10. Procédé selon la revendication 8 ou 9, dans lequel les données d'identification (150) du dispositif de recouvrement de fenêtre (110) comprennent l'une ou plusieurs des informations suivantes : des informations de taille de recouvrement de fenêtre, des informations de type de recouvrement de fenêtre et/ou des informations de couleur de recouvrement de fenêtre.

11. Procédé selon l'une quelconque des revendications précédentes, dans lequel la représentation visuelle (122) illustre un dispositif de recouvrement de fenêtre (110) de taille sensiblement réelle, de sorte que la représentation visuelle (122) présente sensiblement une taille correspondant à un dispositif de recouvrement de fenêtre (110) de taille réelle.

12. Procédé selon l'une quelconque des revendications précédentes, dans lequel au moins l'un de l'élément de représentation amovible (120) et de l'élément d'identification amovible (120, 130) est une feuille amovible (112), telle qu'une feuille d'aluminium ou une feuille de plastique, qui est fixée de manière amovible à une surface de la vitre (102).

13. Procédé selon l'une quelconque des revendications précédentes, dans lequel l'élément de représentation amovible (120) se prolonge sensiblement le long de toute la largeur (W1) de la partie visible (103) de la vitre (102) de sorte que dans lequel la représentation visuelle (122) de l'élément de représentation amovible (120) se prolonge sensiblement le long de toute la largeur (W1) de la partie visible (103) de la vitre (102).

14. Procédé selon l'une quelconque des revendications précédentes, dans lequel les données d'identification sont représentées par des codes prédéterminés.

15. Procédé selon l'une quelconque des revendications précédentes, dans lequel les dispositifs de recouvrement de fenêtre présentés sont sélectionnés au niveau du serveur sur la base des données d'identification transmises,
et/ou
dans lequel le serveur fournit le résultat de la page Web à présenter au terminal mobile utilisateur, où le résultat de la page Web est basé au moins en partie sur les données d'identification transmises.

16. Procédé selon l'une quelconque des revendications précédentes, dans lequel les dispositifs de recouvrement de fenêtre présentés (110) sont des dispositifs de recouvrement de fenêtre (110) représentés par la représentation visuelle (122).
